# EUROPÄISCHE PATENTSCHRIFT

(11) **EP 3 774 945 B1**
(45) Veröffentlichungstag und Bekanntmachung des Hinweises auf die Patenterteilung: **06.07.2022**
(21) Anmeldenummer: 19711594.2
(22) Anmeldetag: 15.03.2019
(51) Int. Cl.: C09J 133/08, C08L 33/10, C08L 33/12

(54) **METHACRYLATOLIGOMERE FÜR HAFTKLEBMASSEN**
METHACRYLATE OLIGOMERS FOR PRESSURE SENSITIVE ADHESIVES
OLIGOMÈRES DE MÉTHACRYLATE POUR ADHÉSIFS SENSIBLES À LA PRESSION

(30) Priorität: 27.03.2018 DE 102018204661
(43) Veröffentlichungstag der Anmeldung: 17.02.2021
(73) Patentinhaber: tesa SE, 22848 Norderstedt (DE)
(72) Erfinder: PRENZEL, Alexander, 22529 Hamburg (DE); PÜTZ, Benjamin, 41464 Neuss (DE); BOLUS, Anika, 22529 Hamburg (DE)
(74) Vertreter: tesa SE
(86) Internationale Anmeldenummer: PCT/EP2019/056635
(87) Internationale Veröffentlichungsnummer: WO 2019/185377

(56) Entgegenhaltungen:
- EP-A1- 1 491 604
- JP-A- 2012 107 103
- US-A1- 2005 202 238

## Beschreibung

Die vorliegende Offenlegung betrifft das technische Gebiet der niedermolekularen Makromoleküle auf Basis von (Meth)Acrylaten. Der übergeordnete Kontext der Erfindung liegt auf dem Gebiet der Haftklebmassen, für die erfindungsgemäße Methacrylat-Oligomere als Klebharze dienen können. Es werden spezielle Methacrylat-Oligomere mit enger Molekulargewichtsverteilung vorgeschlagen. Die Erfindung betrifft eine Haftklebmasse, die ein erfindungsgemäßes Oligomer enthält.

Klebrigmacher (Tackifier) werden in der Technik für sehr unterschiedliche Einsatzgebiete verwendet. Unter anderem ist es inzwischen auch auf dem Gebiet der Klebstoffe gebräuchlich, den mehr oder weniger klebrigen Matrixmaterialien Zusätze beizugeben, welche die Klebkraft der Zusammensetzung erhöhen. Es liegt auf der Hand, dass ein solcher Hilfsstoff die sonstigen Eigenschaften der Klebmasse möglichst wenig oder wenn, dann in positivem Sinne beeinflussen soll.

Im Bereich der Haftklebmassen, wie sie vielfältig in Klebbebändern verwendet werden, haben sich Poly(meth)acrylate als sehr gut einsetzbare Basismaterialien erwiesen. Sie zeigen exzellente Eigenschaften im Hinblick auf zum Beispiel die Beständigkeit gegenüber Licht, Wetter und einer Reihe von Chemikalien ebenso wie hinsichtlich ihrer intrinsischen Klebkraft sowie ihrer Alterungs- und Hitzebeständigkeit. Zudem sind sie auf einer Reihe von polaren und auch weniger polaren Substraten verwendbar, beispielsweise auf Glas und Stahl, aber auch auf Polystyrol und Polycarbonaten. Es besteht ein grundsätzliches Interesse daran, die Klebleistung Poly(meth)acrylat-basierter Zusammensetzungen gerade auf weniger polaren Substraten zu verbessern, um von den zahlreichen sonstigen positiven Eigenschaften dieser Substanzen auch bei derartigen Verklebungen profitieren zu können. In diesem Zusammenhang sind insbesondere auch Weiterentwicklungen geeigneter Klebharze von Interesse.

Im Stand der Technik sind u.a. Klebharze beschrieben, welche auf niedermolekularen Poly(meth)acrylaten basieren.

So beschreibt US 3,867,481 formbare Zusammensetzungen auf Basis von Polyvinylhalogeniden, die mit Acrylpolymeren mit einem Molekulargewicht von 1.500 bis 10.000 g/mol modifiziert sind und auf Alkylmethacrylate und weitere (Meth)Acrylsäureester sowie Styrol zurückzuführen sind. Die Zusammensetzungen sollen verbesserte Fließ- und Verarbeitungseigenschaften aufweisen.

US 4,912,169 offenbart Klebstoffzusammensetzungen, die ein polymeres Additiv enthalten, welches aus einer Monomerenzusammensetzung von C₁-C₂₀-Alkyl- und Cycloalkyl(meth)acrylaten, frei-radikalisch polymerisierbaren Olefinsäuren und optional anderen ethylenisch ungesättigten Monomeren polymerisiert wird und ein zahlengemitteltes Molekulargewicht von weniger als 35.000 g/mol sowie einen Erweichungspunkt von mehr als 40 °C aufweist.

JP 54-3136 A beschreibt einen Klebstoff, der ein Acrylpolymer und ein Oligomer mit einem Molekulargewicht von 500 bis 3.500 g/mol enthält, wobei letzteres als Tackifier bezeichnet wird und aus einer oder mehreren Verbindungen ausgewählt aus C₁-C₁₂-Alkylacrylaten, C₄-C₁₂-Alkylmethacrylaten und Vinylaromaten copolymerisiert wird.

EP 1 491 604 A1 und US 2005/202238 A1 beschreiben eine Haftklebmasse, die ein Acrylatpolymer mit einer eine Carboxygruppe enthaltenden Monomerkomponente und ein Oligomer umfasst. Das Oligomer enthält als Hauptmonomer eine ethylenisch ungesättigte Verbindung, deren Homopolymer eine Glasübergangstemperatur von 60 bis 190 °C aufweist und eine cyclische Struktur hat. Ferner umfasst die Monomerbasis des Oligomers ein eine Carboxygruppe enthaltendes Monomer.

EP 2 385 089 A1 offenbart ein einschichtiges Haftklebetape aus einer Acrylat-Haftklebmasseschicht. Die Acrylat-Haftklebmasse enthält ein Acrylatpolymer und ein (Meth)acrylatoligomer, dessen Glasübergangstemperatur kleiner oder gleich 45 °C beträgt und dessen gewichtsmittleres Molekulargewicht 1.500 bis 4.000 g/mol beträgt. Insbesondere für Verklebungen im Elektronikbereich, z.B. für Verklebungen von Displays, ist häufig neben einem sehr guten Klebeprofil auch eine weitgehende optische Transparenz der eingesetzten Klebebänder gefordert. Klebharze können die Transparenz und auch weitere Eigenschaften einer Haftklebmasse negativ beeinflussen, sind andererseits aber zur Erzielung eines hinreichenden Klebeprofils erforderlich. Aufgabe der vorliegenden Erfindung war es somit, Klebharze zur Verfügung zu stellen, die in einer großen Bandbreite an (Meth)Acrylathaftklebmassen eingesetzt werden können und die Ausprägung eines ausgewogenen Eigenschaftsprofils hinsichtlich Klebkraft auf unterschiedlichen Substraten, Scherfestigkeit, Feucht-Wärme-Beständigkeit, UV- und Ozonbeständigkeit sowie die Zurverfügungstellung transparenter Haftklebmassen bzw. Klebebänder ermöglichen.

Der Lösung der Aufgabe liegt der Gedanke zugrunde, Methacrylat-basierte Klebharze mit besonders enger Molekulargewichtsverteilung einzusetzen. Der Gegenstand der Erfindung ist somit eine Haftklebmasse gemäß dem vorliegenden Anspruch 1, enthaltend mindestens ein Poly(meth)acrylat und mindestens ein Oligomer mit einem gewichtsmittleren Molekulargewicht M_{w}, gemessen nach der hierin beschriebenen Messmethode 1b, von 1.500 bis 5.000 g/mol und einer Polydispersität D von ≤ 2, dessen Aufbau auf eine Monomerenzusammensetzung bestehend aus
- mindestens 50 Gew.-%, bezogen auf das Gesamtgewicht der Monomerenzusammensetzung, eines Gemischs aus
   a) Methylmethacrylat
   b) Cyclohexylmethacrylat; und
- optional
   c) einem oder mehreren weiteren radikalisch polymerisierbaren Monomeren sowie
mindestens eine eine -SH-Gruppe enthaltende Verbindung
zurückzuführen ist.

Wie sich gezeigt hat, weisen derartige Methacrylat-Harze eine hohe Kompatibilität mit einer Vielzahl an (Meth)Acrylat-basierten Haftklebmassen auf und tragen zur Ausbildung eines ausgewogenen Eigenschaftsprofils dieser Massen bei.

Das gewichtsmittlere Molekulargewicht M_{w} wird erfindungsgemäß nach der Methode AM 1003 (hierin als "Messmethode 1b" vorgestellt) gemessen.

Unter der Polydispersität D wird, dem allgemeinen Verständnis des Fachmanns entsprechend, das Verhältnis zwischen gewichtsmittlerem Molekulargewicht M_{w} und zahlenmittlerem Molekulargewicht Mₙ verstanden: D = M_{w}/Mₙ.

Methylmethacrylat ist in der dem erfindungsgemäßen Oligomer zugrunde liegenden Monomerenzusammensetzung bevorzugt zu 40 bis 90 Gew.-%, bezogen auf das Gesamtgewicht der Monomerenzusammensetzung, enthalten.

Cyclohexylmethacrylat ist in der dem erfindungsgemäßen Oligomer zugrunde liegenden Monomerenzusammensetzung bevorzugt zu 10 bis 60 Gew.-%, bezogen auf das Gesamtgewicht der Monomerenzusammensetzung, enthalten.

Ein Gemisch aus Methylmethacrylat und Cyclohexylmethacrylat ist in der dem erfindungsgemäßen Oligomer zugrunde liegenden Monomerenzusammensetzung erfindungsgemäß zu mindestens 50 Gew.-% enthalten. Bevorzugt ist das Gemisch aus Methylmethacrylat und Cyclohexylmethacrylat in der dem erfindungsgemäßen Oligomer zugrunde liegenden Monomerenzusammensetzung zu mindestens 60 Gew.-%, besonders bevorzugt zu mindestens 65 Gew.-%, insbesondere zu mindestens 70 Gew.-%, enthalten.

Die optional in der dem erfindungsgemäßen Oligomer zugrunde liegenden Monomerenzusammensetzung enthaltenen weiteren radikalisch polymerisierbaren Monomeren sind bevorzugt ausgewählt aus der Gruppe bestehend aus Acrylsäureestern, Methacrylsäureestern, Acrylamiden, Vinylestern, Vinylethern und Vinylaromaten. Stärker bevorzugt sind die weiteren radikalisch polymerisierbaren Monomeren ausgewählt aus Acrylsäureestern und Methacrylsäureestern, insbesondere aus Methacrylsäureestern. Ganz besonders bevorzugt ist Isobutylmethacrylat als weiteres radikalisch polymerisierbares Monomer in der dem erfindungsgemäßen Oligomer zugrunde liegenden Monomerenzusammensetzung enthalten. Beispielsweise besteht die dem erfindungsgemäßen Oligomer zugrunde liegende Monomerenzusammensetzung aus mindestens 50 Gew.-%, bezogen auf das Gesamtgewicht der Monomerenzusammensetzung, eines Gemischs aus
a) Methylmethacrylat und
b) Cyclohexylmethacrylat;
   sowie aus
c) Isobutylmethacrylat.

Neben der Monomerenzusammensetzung ist erfindungsgemäß mindestens eine eine -SH-Gruppe enthaltende Verbindung am Aufbau des erfindungsgemäßen Oligomers beteiligt. Bevorzugt sind eine oder mehrere eine -SH-Gruppe enthaltende Verbindung(en) zu insgesamt 1 bis 15 mol-%, stärker bevorzugt von 3 bis 12 mol-%, insbesondere von 5 bis 9 mol-%, jeweils bezogen auf die Gesamtheit der am Aufbau des Oligomers beteiligten Stoffe, in dieser Gesamtheit enthalten. Die eine -SH-Gruppe enthaltenden Verbindungen werden nicht der dem erfindungsgemäßen Oligomer zugrunde liegenden Monomerenzusammensetzung zugerechnet, vielmehr sind diese Verbindungen als Kettenübertragungsreagenzien und/oder Polymerisationsregler vorgesehen.

Die eine -SH-Gruppe enthaltende Verbindung ist bevorzugt ausgewählt aus Alkylthiolen und Hydroxycarbonsäuren. Beispielsweise ist die eine -SH-Gruppe enthaltende Verbindung Dodecanthiol (Laurylmercaptan), 2-Mercaptopropionsäure oder Thioglycolsäure (Mercaptoessigsäure). Bevorzugt enthält die eine -SH-Gruppe enthaltende Verbindung keine Carboxy-Gruppe und keine Thiocarboxy-Gruppe. Besonders bevorzugt ist die eine -SH-Gruppe enthaltende Verbindung daher Dodecanthiol. Es können eine oder mehrere eine -SH-Gruppe enthaltende Verbindungen in der Gesamtheit der am Aufbau des Oligomers beteiligten Stoffe enthalten sein, bevorzugt ist eine einzige eine -SH-Gruppe enthaltende Verbindung enthalten.

Das gewichtsmittlere Molekulargewicht M_{w} des erfindungsgemäßen Oligomers beträgt bevorzugt 2.000 bis 4.500 g/mol, besonders bevorzugt 2.500 bis 4.000 g/mol. Die Polydispersität D beträgt bevorzugt ≤ 1,8.

Weiter weist das erfindungsgemäße Oligomer bevorzugt eine Glasübergangstemperatur, ermittelt gemäß der hierin beschriebenen Methode, von ≤ 100 °C, insbesondere von ≤ 80 °C, ganz besonders bevorzugt von ≤ 65 °C auf.

Das erfindungsgemäße Oligomer weist bevorzugt eine lodzahl, gemessen nach DIN EN ISO 3961, von ≤ 0,3 auf. Stärker bevorzugt weist das erfindungsgemäße Oligomer eine lodzahl, gemessen nach DIN EN ISO 3961, von ≤ 0,2, insbesondere von ≤ 0,1 auf. Die Iod-Zahl ist ein Maß für den Grad der Ungesättigtheit einer chemischen Verbindung. Bei ihrer Ermittlung werden Halogen-Verbindungen an die Doppelbindungen addiert. Die Iod-Zahl gibt das Verhältnis der Masse an Halogen, als Iod berechnet, die von dem Probenmaterial unter Versuchsbedingungen gebunden wird, zur Masse des Probenmaterials an.

Der geringe Doppelbindungsgehalt des erfindungsgemäßen Oligomers indiziert eine hohe Alterungsstabilität und geringe Vergilbungsneigung.

Ein weiterer Gegenstand der Offenlegung ist ein Verfahren zur Herstellung eines erfindungsgemäßen Oligomers, das dadurch gekennzeichnet ist, dass es folgende Schritte umfasst:
a) Lösen der Monomere in einem Lösemittel unter Zugabe eines Radikalbildners;
b) freie radikalische Polymerisation in Lösung bei Temperaturen von ≤ 75 °C.

Es hat sich gezeigt, dass ein derartiges Polymerisationsverfahren den Erhalt von Methacrylat-Oligomeren mit besonders enger Molekulargewichtsverteilung ermöglicht. In besonderem Maße wird dies durch den Einsatz mindestens einer eine -SH-Gruppe enthaltenden Verbindung erreicht. Bevorzugt umfasst das Verfahren daher einen Schritt
c) Zugabe mindestens einer eine -SH-Gruppe enthaltenden Verbindung zu der Polymerisationslösung.

Die Zugabe der mindestens einen eine -SH-Gruppe enthaltenden Verbindung zu der Polymerisationslösung kann vor oder nach Beginn der freien radikalischen Polymerisation erfolgen.

Dem erfindungsgemäßen Oligomer entsprechend wird die eine oder werden mehrere eine - SH-Gruppe enthaltende Verbindung(en) zu insgesamt 1 bis 15 mol-%, stärker bevorzugt von 3 bis 12 mol-%, insbesondere von 5 bis 9 mol-%, jeweils bezogen auf die Gesamtheit der am Aufbau des Oligomers beteiligten Stoffe, zugegeben.

Die eine -SH-Gruppe enthaltende Verbindung ist bevorzugt ausgewählt aus Alkylthiolen und Hydroxycarbonsäuren. Beispielsweise ist die eine -SH-Gruppe enthaltende Verbindung Dodecanthiol (Laurylmercaptan), 2-Mercaptopropionsäure oder Thioglycolsäure (Mercaptoessigsäure). Bevorzugt enthält die eine -SH-Gruppe enthaltende Verbindung keine Carboxy-Gruppe und keine Thiocarboxy-Gruppe. Besonders bevorzugt ist die eine -SH-Gruppe enthaltende Verbindung daher Dodecanthiol.

Die freie radikalische Polymerisation erfolgt bevorzugt bei Temperaturen von 60 - 70 °C.

Das Verfahren ermöglicht den Erhalt von Methacrylatharzen mit besonders enger Molekulargewichtsverteilung, die wiederum eine gute Kompatibilität mit einer Vielzahl von (Meth)Acrylat-basierten Haftklebmassen aufweisen und diesen ein besonders ausgewogenes Eigenschaftsprofil verleihen.

Das Poly(meth)acrylat ist bevorzugt auf die folgende Monomerzusammensetzung zurückzuführen:
d) Acrylsäureester und/oder Methacrylsäureester der folgenden Formel

   CH₂ = C(R^{I})(COOR^{II}),

   worin R^{I} = H oder CH₃ und R^{II} ein Alkylrest mit 4 bis 14 C-Atomen ist,
e) olefinisch ungesättigte Monomere mit funktionellen Gruppen, welche mit Epoxid- oder Isocyanatgruppen chemisch reagieren können,
f) optional weitere Acrylate und/oder Methacrylate und/oder olefinisch ungesättigte Monomere, die mit der Komponente d) copolymerisierbar sind.

Die Anteile der Komponenten d), e) und f) sind bevorzugt derart gewählt, dass das Polymerisationsprodukt eine Glasübergangstemperatur von ≤ 15 °C aufweist.

Bevorzugt sind die Monomere der Komponente d) zu einem Anteil von 45 bis 99 Gew.-%, die Monomere der Komponente e) zu einem Anteil von 1 bis 20 Gew.-% und die Monomere der Komponente f) zu einem Anteil von 0 bis 40 Gew.-% im Poly(meth)acrylat der erfindungsgemäßen Haftklebmasse enthalten. Die Angaben sind bezogen auf die Monomermischung für das "Basispolymer", d.h. Zusätze von Additiven zu dem fertigen Polymer, wie Harze etc, werden dabei nicht berücksichtigt.

Die Monomere der Komponente d) sind insbesondere weichmachende und/oder unpolare Monomere.

Vorzugsweise sind die Monomere d) Acryl- oder Methacrylsäureester mit C₄-C₁₄-Alkylgruppen, besonders bevorzugt C₄-C₉-Alkylgruppen, in der Alkoholkomponente. Beispiele für derartige Monomere sind n-Butylacrylat, n-Butylmethacrylat, n-Pentylacrylat, n-Pentylmethacrylat, n-Amylacrylat, n-Hexylacrylat, Hexylmethacrylat, n-Heptylacrylat, n-Octylacrylat, n-Octylmethacrylat, n-Nonylacrylat, Isobutylacrylat, Isooctylacrylat, Isooctylmethacrylat und deren verzweigten Isomere, z. B. 2-Ethylhexylacrylat und 2-Ethylhexylmethacrylat.

Die Monomere der Komponente e) sind bevorzugt Monomere mit funktionellen Gruppen ausgewählt aus der Gruppe bestehend aus: Hydroxy-, Carboxy-, Sulfonsäure-, Phosphonsäure-, Carbonsäureanhydrid-, Epoxid- und Aminogruppen.

Besonders bevorzugte Monomere der Komponente e) sind Acrylsäure, Methacrylsäure, Itaconsäure, Maleinsäure, Fumarsäure, Crotonsäure, Aconitsäure, Dimethylacrylsäure, β-Acryloyloxypropionsäure, Trichloracrylsäure, Vinylessigsäure, Vinylphosphonsäure, Itaconsäure, Maleinsäureanhydrid, Hydroxyethylacrylat, Hydroxypropylacrylat, Hydroxyethylmethacrylat, Hydroxypropylmethacrylat, 6-Hydroxyhexylmethacrylat, Allylalkohol, Glycidylacrylat und Glycidylmethacrylat.

Als Komponente f) können grundsätzlich alle vinylisch-funktionalisierten Verbindungen eingesetzt werden, die mit der Komponente d), bevorzugt zusätzlich mit der Komponente e) copolymerisierbar sind. Diese Monomere können insbesondere zur Einstellung der Eigenschaften der resultierenden Haftklebemasse dienen.

Beispielhafte Monomere f) sind:
Methylacrylat, Ethylacrylat, Propylacrylat, Methylmethacrylat, Ethylmethacrylat, Benzylacrylat, Benzylmethacrylat, sec-Butylacrylat, tert-Butylacrylat, Phenylacrylat, Phenylmethacrylat, Isobornylacrylat, Isobornylmethacrylat, tert-Butylphenylacrylat, tert-Butylphenylmethacrylat, Dodecylmethacrylat, Isodecylacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrlylat, Phenoxyethylmethacrylat, 2-Butoxyethylmethacrylat, 2-Butoxyethylacrylat, 3,3,5-Trimethylcyclohexylacrylat, 3,5-Dimethyladamantylacrylat, 4-Cumylphenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofufurylacrylat, Diethylaminoethylacrylat, Diethylaminoethylmethacrylat, Dimethylaminoethyl-acrylat, Dimethylaminoethylmethacrylat, 2-Butoxyethylacrylat, 2-Butoxyethylmethacrylat, 3-Methoxyacrylsäuremethylester, 3-Methoxybutylacrylat, Phenoxyethylacrlylat, Phenoxyethylmethacrylat, 2-Phenoxyethylmethacrylat, Butyldiglykolmethacrylat, Ethylenglycolacrylat, Ethylenglycolmonomethylacrylat, Methoxy Polyethylenglykolmethacrylat 350, Methoxy Polyethylenglykolmethacrylat 500, Propylenglycolmonomethacrylat, Butoxydiethylenglykolmethacrylat, Ethoxytriethylenglykolmethacrylat, Octafluoropentylacrylat, Octafluoropentylmethacrylat, 2,2,2-Trifluoroethylmethacrylat, 1,1,1,3,3,3-Hexafluoroisopropylacrylat, 1,1,1,3,3,3-Hexafluoroisopropylmethacrylat, 2,2,3,3,3-Pentafluoropropylmethacrylat, 2,2,3,4,4,4-Hexafluorobutylmethacrylat, 2,2,3,3,4,4,4-Heptafluorobutylacrylat, 2,2,3,3,4,4,4-Heptafluorobutylmethacrylat, 2,2,3,3,4,4,5,5,6,6,7,7,8,8,8-Pentadecafluorooctylmethacrylat, Dimethylaminopropylacrylamid, Dimethylaminopropylmethacrylamid, N-(1-Methyl-undecyl)acrylamid, N-(n-Butoxymethyl)acrylamid, N-(Butoxymethyl)methacrylamid, N-(Ethoxymethyl)acrylamid, N-(n-Octadecyl)acrylamid; weiterhin N,N-Dialkyl-substituierte Amide, wie beispielsweise N,N-Dimethylacrylamid, N,N-Dimethylmethacrylamid, N-Benzylacrylamide, N-Isopropylacrylamid, N-tert-Butylacrylamid, N-tert-Octylacrylamid, N-Methylolacrylamid, N-Methylolmethacrylamid, Acrylnitril, Methacrylnitril, Vinylether wie Vinylmethylether, Ethylvinylether, Vinylisobutylether, Vinylester wie Vinylacetat, Vinylchlorid, Vinylhalogenide, Vinylidenchlorid, Vinylidenhalogenide, Vinylpyridin, 4-Vinylpyridin, N-Vinylphthalimid, N-Vinyllactam, N-Vinylpyrrolidon, Styrol, o- und p-Methylstyrol, o-Butylstyrol, 4-n-Butylstyrol, 4-n-Decylstyrol, 3,4-Dimethoxystyrol, Makromonomere wie 2-Polystyrolethylmethacrylat (Molekulargewicht M_{w} von 4.000 bis 13.000 g/mol) und Poly(methylmethacrylat)ethylmethacrylat (M_{w} von 2.000 bis 8.000 g/mol).

Monomere der Komponente f) können auch derart gewählt werden, dass sie funktionelle Gruppen enthalten, die eine nachfolgende strahlenchemische Vernetzung (beispielsweise durch Elektronenstrahlen oder UV) unterstützen. Geeignete copolymerisierbare Photoinitiatoren sind z.B. Benzoinacrylat und acrylatfunktionalisierte Benzophenonderivate. Monomere, die eine Vernetzung durch Elektronenbestrahlung unterstützen, sind z.B. Tetrahydrofufurylacrylat, N-tert-Butylacrylamid und Allylacrylat.

Das bzw. die Poly(meth)acrylat(e) der erfindungsgemäßen Haftklebmasse werden bevorzugt durch konventionelle radikalische Polymerisationen oder kontrollierte radikalische Polymerisationen hergestellt. Dabei können übliche Polymerisationsinitiatoren sowie gegebenenfalls Regler verwendet werden. Grundsätzlich kann bei den üblichen Temperaturen in Substanz, in Emulsion, z.B. in Wasser oder flüssigen Kohlenwasserstoffen, oder in Lösung polymerisiert werden.

Bevorzugt werden die Polyacrylate durch Polymerisation der Monomere in Lösungsmitteln, bevorzugt in Lösungsmitteln eines Siedebereichs von 50 bis 150 °C, insbesondere von 60 bis 120 °C unter Verwendung der üblichen Mengen an Polymerisationsinitiatoren, die im allgemeinen bei 0,01 bis 5, insbesondere bei 0,1 bis 2 Gew.-%, bezogen auf das Gesamtgewicht der Monomeren, liegen, hergestellt. Prinzipiell eignen sich alle für (Meth)Acrylate üblichen Initiatoren, beispielsweise Peroxide, Hydroperoxide und Azoverbindungen, z.B. Dibenzoylperoxid, Cumolhydroperoxid, Cyclohexanonperoxid, Di-t-butylperoxid, Cyclohexylsulfonylacetylperoxid, Diisopropylpercarbonat, t-Butylperoktoat, Benzpinacol. Besonders bevorzugte Radikalquellen bzw. radikalische Initiatoren sind 2,2'-Azobis(2-methylbutyronitril) (Vazo^{®} 67^{™} der Fa. DuPont) und 2,2'-Azobis(2-methylpropionitril) (2,2'-Azobisisobutyronitril; AIBN; Vazo^{®} 64^{™} der Fa. DuPont).

Als Lösungsmittel kommen bevorzugt Alkohole wie Methanol, Ethanol, n-und i-Propanol, n-und i-Butanol, vorzugsweise Isopropanol und/oder Isobutanol; sowie Kohlenwasserstoffe wie Toluol und insbesondere Benzine eines Siedebereichs von 60 bis 120 °C in Frage. Insbesondere können auch Ketone wie vorzugsweise Aceton, Methylethylketon, Methylisobutylketon und Ester wie Essigsäureethylester sowie Gemische der genannten Lösungsmittel eingesetzt werden, wobei Gemische, die Isopropanol, insbesondere in Mengen von 2 bis 15 Gew.-%, bevorzugt 3 bis 10 Gew.-%, bezogen auf das eingesetzte Lösungsmittelgemisch, enthalten, bevorzugt werden.

Die gewichtsmittleren Molekulargewichte M_{w} der Poly(meth)acrylate liegen bevorzugt in einem Bereich von 20.000 bis 2.000.000 g/mol; sehr bevorzugt in einem Bereich von 100.000 bis 1.500.000 g/mol, äußerst bevorzugt in einem Bereich von 200.000 bis 1.200.000 g/mol. Dazu kann es vorteilhaft sein, die Polymerisation in Gegenwart geeigneter Polymerisationsregler wie Thiole, Halogenverbindungen und/oder Alkohole durchzuführen, um das gewünschte mittlere Molekulargewicht einzustellen.

Die Poly(meth)acrylate haben vorzugsweise einen K-Wert von 30 bis 90, besonders bevorzugt von 50 bis 80, gemessen in Toluol (1%ige Lösung, 21 °C). Der K-Wert nach Fikentscher ist ein Maß für Molekulargewicht und Viskosität eines Polymerisats.

Erfindungsgemäße Oligomere und/oder Oligomere, die nach einem offenlegungsgemäßen Verfahren hergestellt sind, sind in einer erfindungsgemäßen Haftklebmasse bevorzugt zu insgesamt ≤ 50 Gew.-%, bezogen auf das Gesamtgewicht der Haftklebmasse, enthalten.

Ein weiterer Gegenstand der Offenlegung ist die Verwendung eines erfindungsgemäßen Oligomers und/oder eines Oligomers, das nach einem offenlegungsgemäßen Verfahren hergestellt wurde, zur Herstellung von transparenten Klebmassen, insbesondere von transparenten Klebmassen für Verklebungen in elektronischen Geräten, beispielsweise für Verklebungen von Displays.

### Beispiele

### Messmethoden allgemein

Gelpermeationschromatographie GPC (Messmethoden 1a und 1b):
Die Angaben der zahlenmittleren und gewichtsmittleren Molekulargewichte Mₙ, M_{w} und M_{z} sowie der Polydispersität D in dieser Schrift beziehen sich auf die Bestimmung per Gelpermeationschromatographie.

Es wird zwischen zwei unterschiedlichen Messmethoden unterschieden.

Messmethode 1a ist vor allem für hochmolekulare Poly(meth)acrylate geeignet. Die Bestimmung erfolgt an 100 µl klarfiltrierter Probe (Probenkonzentration 0,5 g/l). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 10 µm, ID 8,0 mm · 50 mm verwendet. Zur Auftrennung werden die Säulen des Typs PSS-SDV, 10 µm, 10³ Å sowie 10⁵ Å und 10⁶ Å mit jeweils ID 8,0 mm x 300 mm eingesetzt (Säulen der Firma Polymer Standards Service; Detektion mittels Differentialrefraktometer PSS-SECurity 1260 RID). Die Durchflussmenge beträgt 0,5 ml pro Minute. Die Kalibrierung erfolgt gegen PMMA-Standards (Polymethylmethacrylat-Kalibrierung).

Messmethode 1b eignet sich vor allem für niedermolekulare Poly(meth)acrylate.

Die Bestimmung erfolgt an 100 µl klarfiltrierter Probe (Probenkonzentration 2 g/l). Als Eluent wird Tetrahydrofuran eingesetzt. Die Messung erfolgt bei 25 °C. Als Vorsäule wird eine Säule Typ PSS-SDV, 5 µm, 10³ Å, ID 8,0 mm · 50 mm verwendet. ZurAuftrennung werden die Säulen des Typs PSS-SDV, 5 µm, 10³ Å sowie 10² Å mit jeweils ID 8,0 mm x 300 mm eingesetzt (Säulen der Firma Polymer Standards Service; Detektion mittels Differentialrefraktometer PSS-SECurity 1260 RID). Die Durchflussmenge beträgt 1,0 ml pro Minute. Die Kalibrierung erfolgt gegen PS-Standards (Polystyrene-Kalibrierung).

K-Wert (nach FIKENTSCHER) (Messmethode 2):
Der K-Wert ist ein Maß für die durchschnittliche Molekülgröße hochpolymerer Stoffe. Zur Messung wurden 1%-ige (1g/100 mL) toluolische Polymerlösungen herstellt und mit Hilfe eines VOGEL-OSSAG-Viskosimeters deren kinematische Viskositäten bestimmt. Nach Normierung auf die Viskosität des Toluols wird die relative Viskosität erhalten, aus der sich nach FIKENTSCHER der K-Wert errechnen lässt (Polymer 1967, 8, 381 ff.).

Feststoffgehalt (Messmethode 3):
Der Feststoffgehalt ist ein Maß für den Anteil an nicht verdampfbaren Bestandteilen in einer Polymerlösung. Er wird gravimetrisch bestimmt, indem man die Lösung einwiegt, dann für 2 Stunden bei 120 °C im Trockenschrank die verdampfbaren Anteile abdampft und den Rückstand zurückwiegt.

Glasübergangstemperatur Tg mittels Dynamischer Scanning Kalorimetrie (DSC) (Messmethode 4):
Es werden ca. 5 mg einer unbehandelten Polymerprobe in ein Aluminiumtiegelchen (Volumen 25 µl) eingewogen und mit einem gelochten Deckel verschlossen. Zur Messung wird ein DSC 204 F1 der Firma Netzsch verwendet. Es wird zwecks Inertisierung unter Stickstoff gearbeitet. Die Probe wird zunächst auf -150 °C abgekühlt, dann mit einer Heizrate von 10 K/min bis +150 °C aufgeheizt und erneut auf -150 °C abgekühlt. Die sich anschließende zweite Heizkurve wird erneut bei 10 K/min gefahren und die Änderung der Wärmekapazität aufgenommen. Glasübergänge werden als Stufen im Thermogramm erkannt.

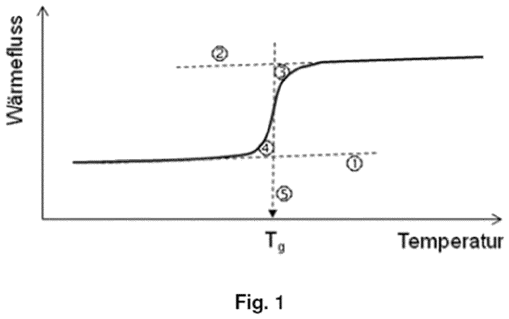

Die Glasübergangstemperatur wird folgendermaßen erhalten (siehe Figur 1):
Der jeweils linear verlaufende Bereich der Messkurve vor und nach der Stufe wird in Richtung steigender (Bereich vor der Stufe, ①) bzw. fallender (Bereich nach der Stufe, ②) Temperaturen verlängert. Im Bereich der Stufe wird eine Ausgleichsgerade ⑤ parallel zur Ordinate so gelegt, dass sie die beiden Verlängerungslinien schneidet, und zwar so, dass zwei Flächen ③ und ④ (zwischen der jeweils einen Verlängerungslinie, der Ausgleichsgeraden und der Messkurve) gleichen Inhalts entstehen. Der Schnittpunkt der so positionierten Ausgleichsgeraden mit der Messkurve ergibt die Glasübergangstemperatur.

LAB Messung (Messmethode 5):
Die LAB-Messung erfolgte nach DIN 5033-3.

| | |
|---|---|
| Lichtquelle / Lichtstandard: | D65 |
| Betrachterwinkel: | 10° |

Das transparente Muster wurde gegen eine weiße Referenzfliese gemessen. Die gemessenen Daten sind relativ als L*a*b* Werte gegen die weiße Referenzfliese aufgetragen und werden wie folgt berechnet a* = a*exp - a*ref und b* = b*exp - b*ref and L* = (100 × L*exp) / L*ref . Für die Anwendung ist insbesondere die Gelbfärbung b* relevant. Daher wird auf die Auftragung der anderen Werte verzichtet.

Bestimmung der lodzahl als Maß für den Doppelbindungsgehalt (Messmethode 6):
DIN EN ISO 3961:2013-12

### Messmethoden Haftklebmassen

180° Klebkrafttest (Messmethode 7):
Ein 20 mm breiter Streifen der auf Polyester als Schicht aufgetragenen Haftklebmasse wurde auf Stahlplatten aufgebracht, die zuvor zweimal mit Aceton und einmal mit Isopropanol gewaschen wurden. Der Haftklebstreifen wurde zweimal mit einem Anpressdruck entsprechend einem Gewicht von 2 kg auf das Substrat aufgedrückt. Das Klebeband wurde anschließend sofort mit einer Geschwindigkeit von 300 mm/min und in einem Winkel von 180 ° vom Substrat abgezogen. Alle Messungen wurden bei Raumtemperatur durchgeführt.

Die Messergebnisse sind in N/cm angegeben und sind gemittelt aus drei Messungen.

Scherstandzeit (Messmethode 8):
Ein 13 mm breiter und 30 mm langer Streifen des Klebebandes wurde auf eine glatte Stahloberfläche, die dreimal mit Aceton und einmal mit Isopropanol gereinigt wurde, aufgebracht. Die Verklebungsfläche betrug 20 mm · 13 mm (Länge · Breite), wobei das Klebeband die Prüfplatte am Rand um 10 mm überragte. Anschließend wurde das Klebeband viermal mit einem Anpressdruck entsprechend einem Gewicht von 2 kg auf den Stahlträger gedrückt. Diese Probe wurde senkrecht aufgehängt, so dass das überstehende Ende des Klebebandes nach unten zeigte.

Bei Raumtemperatur wurde ein Gewicht von z.B. 1 kg (10 N) an dem überstehenden Ende des Klebebandes befestigt; das jeweilige Gewicht ist in den Beispielen aufgeführt. Die Messung wurde bei Normalklima (23 °C, 50 % Luftfeuchtigkeit) und bei 70 °C in einem Wärmeschrank durchgeführt.

Die gemessenen Scherstandzeiten (Zeiten bis zum vollständigen Ablösen des Klebebandes vom Untergrund; Abbruch der Messung bei 10.000 min) sind in Minuten angegeben und entsprechen dem Mittelwert aus drei Messungen.

### Rohstoffe

**Tabelle 1: Kommerziell erhältliche eingesetzte Chemikalien**

| Chemische Verbindung | Handelsname | Hersteller | CAS-Nr. |
|---|---|---|---|
| Methylmethacrylat | Visiomer^{®} MMA | Evonik | 80-62-6 |
| Cyclohexyl meth acryl at | Visiomer^{®} c-HMA | Evonik | 101-43-9 |
| Hydroxyethylmethacrylat | | Sigma Aldrich | 868-77-9 |
| Isobutylmethacrylat | | Sigma Aldrich | 97-86-9 |
| tert.-Butylmethacrylat | | Sigma Aldrich | 585-07-9 |
| Styrol | | Sigma Aldrich | 100-42-5 |
| Laurylmercaptan | 1-Dodecanthiol | Dr. Spiess Chemische Fabrik | 112-55-0 |
| Mercaptoessigsäure | Thioglykolsäure | Sigma Aldrich | 68-11-1 |
| Acrylsäure AS | | BASF/ Sigma | 79-10-7 |
| 2-Ethylhexylacrylat EHA | | BASF | 103-11-7 |
| n-Butylacrylat BA | | BASF | 141-32-2 |
| 2-Hydroxyethylacrylat | | BASF | 818-61-1 |
| Isobornylacrylat | Visiomer^{®} IBOA | Evonik | 5888-33-5 |
| 2,2-Azobis(2-methylbutyronitril) | Vazo^{®} 67 | Akzo Nobel | 13472-08-7 |
| Bis-(4-tert-butylcyclo-hexyl)peroxydicarbonat | Perkadox^{®} 16 | Akzo Nobel | 15520-11-3 |
| N,N,N',N'-Tetrakis(2,3-epoxypropyl)-m-xylol-a,a'-diamin | Erisys GA240 | IMCD | 63738-22-7 |
| Lösung von Hexamethylen-1,6- | Desmodur N75 BA | Bayer AG | |
| diisocyanat-Homopolymer, 75% in n-Butylacetat | | | |
| Terpenphenol-Harz | Dertophene T | DRT | 25359-84-6 |
| Terpenphenol-Harz | Dertophene T 105 | Arizona | 73597-48-5 |

### Polymerisationen

### Polymer P1

Ein für radikalische Polymerisationen konventioneller Reaktor wurde mit 30 kg 2-Ethylhexylacrylat, 67 kg n-Butylacrylat, 3 kg Acrylsäure und 66 kg Aceton/Isopropanol (96:4) befüllt. Nach 45-minütiger Durchleitung von Stickstoffgas unter Rühren wurde der Reaktor auf 58 °C hochgeheizt und 50 g 2,2'-Azobis(2-methylbutyronitril) hinzugegeben. Anschließend wurde das äußere Heizbad auf 75 °C erwärmt und die Reaktion konstant bei dieser Außentemperatur durchgeführt. Nach 1 h wurden erneut 50 g 2,2'-Azobis(2-methylbutyronitril) zugegeben und nach 4 h wurde mit 20 kg Aceton/Isopropanol-Gemisch (96:4) verdünnt.

Nach 5 sowie nach 7 h wurde jeweils mit 150 g Bis-(4-tert-butylcyclohexyl)-peroxydicarbonat nachinitiiert. Nach 22 h Reaktionszeit wurde die Polymerisation abgebrochen und auf Raumtemperatur abgekühlt. Das Polyacrylat hat einen Umsatz von 99,6 %, einen Feststoffgehalt von 49,9%, einen K-Wert von 79,6, ein mittleres Molekulargewicht von M_{w} = 1.557.000 g/mol, Polydispersität D (Mw/Mn) = 12,6.

### Polymer P2

Ein für radikalische Polymerisationen konventioneller Reaktor wurde mit 40 kg 2-Ethylhexylacrylat, 20 kg n-Butylacrylat, 20 kg Isobornylacrylat und 20 kg Hydroxyethylacrylat in 122 kg Ethylacetat/ Toluol (70:30) befüllt. Nach 45minütiger Durchleitung von Stickstoffgas unter Rühren wurde der Reaktor auf 60 °C hochgeheizt und 50 g 2,2'-Azobis(2-methylbutyronitril) hinzugegeben. Anschließend wurde über 5 h die Innentemperatur auf 70 °C geregelt, danach das äußere Heizbad auf 70 °C erwärmt und die Reaktion konstant bei dieser Außentemperatur durchgeführt. 1 h nach der ersten Initiatorzugabe wurden erneut 50 g 2,2'-Azobis(2-methylbutyronitril) zugegeben Nach 5,5 bis 7 h wurde mit 300 g Bis-(4-tert-butylcyclohexyl)-peroxydicarbonat nachinitiiert und nach 8 h wurde mit 20 kg Ethylacetat verdünnt. Nach 22 h Reaktionszeit wurde die Polymerisation abgebrochen und auf Raumtemperatur abgekühlt.

Das Polyacrylat hat einen Umsatz von 99,5 %, einen Feststoffgehalt von 34,1%, einen K-Wert von 73,2, ein mittleres Molekulargewicht von M_{w} = 1.389.000 g/mol, Polydispersität D (M_{w}/Mₙ) = 93,4.

### Polymer P3

Ein für radikalische Polymerisationen konventioneller Reaktor wurde mit 12,0 kg Acrylsäure, 29,0 kg Butylacrylat, 59,0 kg 2-Ethylhexylacrylat und 66,7 kg Aceton/ Benzin 60/95 (1:1) befüllt. Nach 45-minütiger Durchleitung von Stickstoffgas unter Rühren wurde der Reaktor auf 58 °C hochgeheizt und 75 g AIBN hinzugegeben. Anschließend wurde das äußere Heizbad auf 75 °C erwärmt und die Reaktion konstant bei dieser Außentemperatur durchgeführt. Nach 1 h Reaktionszeit wurden wiederum 75 g AIBN hinzugegeben. Nach 4 und 8 h wurde mit jeweils 20,0 kg Aceton/Benzin 60/95 (1:1) Gemisch verdünnt. Nach 8 und nach 10 h wurden jeweils 225 g Bis-(4-tert-butylcyclohexyl)peroxydicarbonat hinzugegeben. Die Reaktion wurde nach 24 h Reaktionszeit abgebrochen und auf Raumtemperatur abgekühlt. Das Polyacrylat hat einen Umsatz von 99,7 %, einen Feststoffgehalt von 40,3%, einen K-Wert von 54,2 und ein mittleres Molekulargewicht von M_{w} = 1.097.000 g/mol, Polydispersität D (M_{w}/Mₙ) = 15,1.

### Acrylatharz - Harz Nr. 1

Ein für radikalische Polymerisationen konventioneller Reaktor wurde mit 44,5 kg Methylmethacrylat (MMA), 33,3 kg Cyclohexylmethacrylat (CHMA), 22,2 kg Isobutylmethacrylat (IBMA) und 11 kg 1-Dodecanthiol (DDT) und 47,6 kg eines Aceton/Isopropanol-Gemischs (96:4) befüllt. Nach 45minütiger Durchleitung von Stickstoffgas unter Rühren wurde der Reaktor auf 58°C hochgeheizt und 444 g Vazo 67 hinzugegeben. Anschließend wurde das äußere Heizbad auf 75 °C erwärmt und die Reaktion konstant bei dieser Außentemperatur durchgeführt. Nach 7 h Reaktionszeit wurden wiederum 444 g Vazo 67 hinzugegeben. Die Reaktion wurde nach 22 h Reaktionszeit abgebrochen und auf Raumtemperatur abgekühlt. Das Acrylatharz hat einen Umsatz von 99,7 % und ein mittleres Molekulargewicht von M_{w} = 4.960 g/mol, Polydispersität D (M_{w}/Mₙ) = 1,7.

Alle Harze mit den Nr. 2-7 und die Vergleiche V1-V3 wurden mit den in Tabelle 2 angegebenen Monomeren analog Harz Nr. 1 hergestellt.

V4 und V5 wurden analog EP 2 385 089 B1, Seite 10, Abschnitt [0061] und [0062] hergestellt.

**Tabelle 2: Angaben zu den Methacrylatharzen**

| Harz Nr. | MMA/ Gew.% | CHMA/ Gew.% | Monomer / Gew.% | Regler/ mol.% bezogen auf Monomer | Tg / °C | M_{w} / g/mol | D (Mw/Mn) | Iodzahl / g/100g |
|---|---|---|---|---|---|---|---|---|
| 1 | 44,5 | 33,3 | IBMA 22,2 | DDT 6,9 | 27 | 4960 | 1,7 | < 0,1 |
| 2 | 50 | 50 | | DDT 6,9 | 40 | 3340 | 1,6 | 0,1 |
| 3 | 72,2 | 27,8 | | DDT 9,8 | 11 | 2280 | 1,5 | 0,1 |
| 4 | 38,9 | 55,55 | HEMA 5,55 | DDT 7,2 | 34 | 3350 | 1,6 | 0,1 |
| 5 | 60 | 40 | | DDT 5,9 | 41 | 3940 | 1,6 | < 0,1 |
| 6 | 45 | 30 | tBMA 25 | DDT 6,2 | 44 | 3820 | 1,7 | 0,1 |
| 7 | 45 | 35 | IBOMA 20 | DDT 6,6 | 42 | 3670 | 1,5 | < 0,1 |
| V1 | | 60 | IBMA 40 | DDT 7,8 | 27 | 3100 | 1,5 | 0,1 |
| V2 | | 44,45 | IBOMA 31,1; Styrol 24,45 | DDT 8,6 | 24 | 6900 | 8,6 | 0,1 |
| V3 | 50 | 50 | | 2-MPA 6,9 | 55 | 5690 | 3,4 | 0,1 |
| V4 | 50 | 50 | | DDT 7,0 | 36 | 3800 | 3,2 | 2,8 |
| V5 | | 60 | IBMA 40 | DDT 5 | 30 | 3200 | 3,6 | 3,1 |

| | | | | | | | | |
|---|---|---|---|---|---|---|---|---|
| V - Vergleich IBMA - Isobutylmethacrylat HEMA - Hydroxyethylmethacrylat tBMA - tert-Butylmethacrylat IBOMA - Isobornylmethacrylat 2-MPA - 2-Mercaptopropionsäure DDT - 1-Dodecanthiol | | | | | | | | |

Herstellung der Lappenmuster zur Auswertung der klebtechnischen Eigenschaften:

### PSA 1 und PSA 3

Die jeweiligen Lösungen der Polymere wurden mit verschiedenen Anteilen zwischen 20 und 40 Gew.% des jeweiligen Harzes abgemischt; 0,075 Gew.-% Erisys GA240, bezogen auf das Polymer, wurden zugegeben und es wurde mit Aceton auf einen Feststoffgehalt von 38 Gew.-% verdünnt. Die Lösung wurde anschließend über ein konventionelles Rakel auf einen 78 µm dicken PET-Träger (20040.9) beschichtet und dann für 15 Minuten bei 120 °C getrocknet. Der resultierende Masseauftrag betrug 50 g/m². Anschließend wurde nach den beschriebenen Testmethoden ausgetestet.

### PSA 2

Die jeweiligen Lösungen der Polymere wurden mit verschiedenen Anteilen zwischen 20 und 40 Gew.% des jeweiligen Harzes abgemischt; 0,8 Gew.-% Desmodur N75 BA, bezogen auf das Polymer, wurden zugegeben und es wurde mit Toluol auf einen Feststoffgehalt von 26 Gew.-% verdünnt. Die Lösung wurde anschließend über ein konventionelles Rakel auf einem 78 µm dicken PET-Träger beschichtet und dann für 15 Minuten bei 120 °C getrocknet. Der resultierende Masseauftrag betrug 50 g/m². Anschließend wurde nach den beschriebenen Testmethoden ausgetestet.

Die Ergebnisse sind in Tabelle 3 enthalten.

**Tabelle 3: Testergebnisse**

| Bsp. Nr. | PSA | Harz Nr. | Anteil Harz / Gew.% | Transparenz | b-Wert nach Lagerung (85°C, 85% r.F., 48h) | KK ASTM / N/cm | KK PE / N/cm | KK PC / N/cm | KK ABS / N/cm | SSZ / min |
|---|---|---|---|---|---|---|---|---|---|---|
| 1 | 1 | 1 | 35 | Sehr gut | 0,6 | 6,1 | 3,0 | 5,6 | 4,5 | 8.631 |
| 2 | 1 | 2 | 30 | Sehr gut | 0,4 | 6,8 | 2,7 | 6,3 | 4,7 | 10.000 |
| 3 | 1 | 3 | 40 | Sehr gut | 0,7 | 7,1 | 3,2 | 6,5 | 4,9 | 9.435 |
| 4 | 1 | 5 | 20 | Sehr gut | 0,5 | 7,3 | 3,0 | 6,6 | 5,2 | 10.000 |
| 5 | 1 | 6 | 35 | Sehr gut | 0,6 | 6,6 | 2,4 | 5,9 | 4,5 | 9.733 |
| 6 | 2 | 4 | 25 | Sehr gut | 0,7 | 6,9 | 1,8 | 6,4 | 4,2 | 10.000 |
| 7 | 2 | 2 | 25 | Sehr gut | 0,4 | 7,2 | 2,2 | 6,9 | 4,8 | 8.294 |
| 8 | 2 | 7 | 30 | Sehr gut | 0,6 | 6,5 | 2,3 | 5,6 | 4,7 | 8.968 |
| 9 | 3 | 3 | 20 | Sehr gut | 0,5 | 5,8 | 1,7 | 5,2 | 4,4 | 9.651 |
| 10 | 3 | 2 | 20 | Sehr gut | 0,5 | 5,4 | 1,6 | 5,0 | 4,1 | 10.000 |
| VB1 | 1 | V3 | 30 | Sehr gut | 0,5 | 7,4 | 0,9 | 6,9 | 4,0 | 1.763 |
| VB2 | 1 | V4 | 35 | Sehr gut | 2,0 | 6,5 | 2,0 | 5,7 | 4,2 | 4.320 |
| VB3 | 1 | Dertophene T105 | 35 | Sehr gut | 2,2 | 8,2 | 3,4 | 7,4 | 5,3 | 10.000 |
| VB4 | 2 | Dertophene T | 25 | Sehr gut | 2,3 | 7,3 | 3,7 | 6,8 | 5,2 | 10.000 |
| VB5 | 2 | V3 | 25 | Mäßig | 0,4 | 5,1 | 1,2 | 4,6 | 4,1 | 3.822 |
| VB6 | 3 | V1 | 20 | Mäßig | 0,8 | 4,8 | 1,3 | 4,2 | 3,9 | 5.417 |
| VB7 | 3 | V5 | 20 | Schlecht | 2,3 | 5,3 | 1,8 | 4,6 | 4,3 | 7.614 |
| VB8 | 3 | V2 | 20 | Schlecht | 0,7 | 4,3 | 0,9 | 3,5 | 2,0 | 539 |

## Patentansprüche

1. Haftklebmasse, enthaltend
- mindestens ein Poly(meth)acrylat und
- mindestens ein Oligomer mit einem gewichtsmittleren Molekulargewicht M_{w}, gemessen nach der hierin beschriebenen Messmethode 1b, von 1.500 bis 5.000 g/mol und einer Polydispersität D von ≤ 2, dessen Aufbau auf eine Monomerenzusammensetzung bestehend aus
o mindestens 50 Gew.-%, bezogen auf das Gesamtgewicht der Monomerenzusammensetzung, eines Gemischs aus
a) Methylmethacrylat und
b) Cyclohexylmethacrylat;
o optional
c) einem oder mehreren weiteren radikalisch polymerisierbaren Monomeren sowie
mindestens eine eine -SH-Gruppe enthaltende Verbindung
zurückzuführen ist.

2. Haftklebmasse gemäß Anspruch 1, **dadurch gekennzeichnet, dass** Methylmethacrylat zu 40 bis 90 Gew.-%, bezogen auf das Gesamtgewicht der Monomerenzusammensetzung, in der Monomerenzusammensetzung enthalten ist.

3. Haftklebmasse gemäß einem der Ansprüche 1 und 2, **dadurch gekennzeichnet, dass** Cyclohexylmethacrylat zu 10 bis 60 Gew.-%, bezogen auf das Gesamtgewicht der Monomerenzusammensetzung, in der Monomerenzusammensetzung enthalten ist.

4. Haftklebmasse gemäß einem der vorstehenden Ansprüche, **dadurch gekennzeichnet, dass** eine -SH-Gruppe enthaltende Verbindungen zu insgesamt 1 bis 15 mol-%, bezogen auf die Gesamtheit der am Aufbau des Oligomers beteiligten Stoffe, in dieser Gesamtheit enthalten sind.

5. Haftklebmasse gemäß einem der vorstehenden Ansprüche, **dadurch gekennzeichnet, dass** die eine -SH-Gruppe enthaltende Verbindung keine Carboxy-Gruppe und keine Thiocarboxy-Gruppe enthält.

6. Haftklebmasse gemäß einem der vorstehenden Ansprüche, **dadurch gekennzeichnet, dass** das Oligomer eine lodzahl, gemessen nach DIN EN ISO 3961, von ≤ 0,3 aufweist.

7. Haftklebmasse gemäß einem der vorstehenden Ansprüche, **dadurch gekennzeichnet, dass** das/die Oligomer(e) zu insgesamt ≤ 50 Gew.-%, bezogen auf das Gesamtgewicht der Haftklebmasse, in der Haftklebmasse enthalten sind.

## Claims

1. Pressure-sensitive adhesive comprising
- at least one poly(meth)acrylate and
- at least one oligomer having a weight-average molecular weight M_{w}, measured by measurement method 1b as described herein, of 1500 to 5000 g/mol and a polydispersity D of ≤ 2, the construction of which derives from a monomer composition consisting of
∘ at least 50 wt%, based on the total weight of the monomer composition, of a mixture of
a) methyl methacrylate and
b) cyclohexyl methacrylate;
∘ optionally
c) one or more further radically polymerizable monomers, and
at least one compound containing an -SH group.

2. Pressure-sensitive adhesive according to Claim 1, **characterized in that** methyl methacrylate is included in the monomer composition at 40 to 90 wt%, based on the total weight of the monomer composition.

3. Pressure-sensitive adhesive according to either of Claims 1 and 2, **characterized in that** cyclohexyl methacrylate is included in the monomer composition at 10 to 60 wt%, based on the total weight of the monomer composition.

4. Pressure-sensitive adhesive according to any of the preceding claims, **characterized in that** the entirety of the substances involved in the construction of the oligomer includes compounds containing an -SH group at in total 1 to 15 mol%, based on this entirety.

5. Pressure-sensitive adhesive according to any of the preceding claims, **characterized in that** the compound containing an -SH group contains no carboxyl group and no thiocarboxyl group.

6. Pressure-sensitive adhesive according to any of the preceding claims, **characterized in that** the oligomer has an iodine number of ≤ 0.3 as measured according to DIN EN ISO 3961.

7. Pressure-sensitive adhesive according to any of the preceding claims, **characterized in that** the oligomer/oligomers are included in the pressure-sensitive adhesive at in total ≤ 50 wt%, based on the total weight of the pressure-sensitive adhesive.

## Revendications

1. Masse autoadhésive, contenant
- au moins un poly(méth)acrylate et
- au moins un oligomère doté d'un poids moléculaire moyen en poids M_{w}, mesuré selon la méthode de mesure 1b décrite ici, de 1 500 à 5 000 g/mole et une polydispersité D de ≤ 2, dont la structure est à base d'une composition de monomères constituée de
o au moins 50 % en poids, par rapport au poids total de la composition de monomères, d'un mélange de
a) méthacrylate de méthyle et
b) méthacrylate de cyclohexyle ;
o éventuellement
c) un ou plusieurs monomères supplémentaires polymérisables de manière radicalaire
ainsi que d'au moins un composé contenant un groupe -SH.

2. Masse autoadhésive selon la revendication 1, **caractérisée en ce que** le méthacrylate de méthyle est contenu dans la composition de monomères à raison de 40 à 90 % en poids, par rapport au poids total de la composition de monomères.

3. Masse autoadhésive selon l'une quelconque des revendications 1 et 2, **caractérisée en ce que** le méthacrylate de cyclohexyle est contenu dans la composition de monomères à raison de 10 à 60 % en poids, par rapport au poids total de la composition de monomères.

4. Masse autoadhésive selon l'une quelconque des revendications précédentes, **caractérisée en ce que** les composés contenant un groupe - SH sont contenus dans cet ensemble à raison d'au total 1 à 15 % en moles, par rapport à l'ensemble des matières impliquées dans la structure de l'oligomère.

5. Masse autoadhésive selon l'une quelconque des revendications précédentes, **caractérisée en ce que** le composé contenant un groupe -SH ne contient aucun groupe carboxy et aucun groupe thiocarboxy.

6. Masse autoadhésive selon l'une quelconque des revendications précédentes, **caractérisée en ce que** l'oligomère présente un indice d'iode, mesuré selon la norme DIN EN ISO 3161, de ≤ 0,3.

7. Masse autoadhésive selon l'une quelconque des revendications précédentes, **caractérisée en ce que** l'oligomère ou les oligomères sont contenus dans la masse autoadhésive à raison d'au total ≤ 50 % en poids, par rapport au poids total de la masse autoadhésive.
